# EUROPEAN PATENT APPLICATION

(11) **EP 4 686 114 A1**
(43) Date of publication of application: **28.01.2026**
(21) Application number: 25191417.2
(22) Date of filing: 23.07.2025
(51) Int. Cl.: H04B 7/185

(54) **INFLIGHT CONNECTIVITY BEAM SELECTION METHOD AND APPARATUS**

(30) Priority: 25.07.2024 US 202463675375 P; 22.07.2025 US 202519277159
(71) Applicant: Panasonic Avionics Corporation, Irvine, CA 92612 (US)
(72) Inventor: WADE, John, California, 92612 (US); WONG, Brian, California, 92612 (US)
(74) Representative: Barker Brettell LLP

(57) **Abstract**

A method for providing data connectivity for passengers in a commercial passenger vehicle, includes determining, by a computing platform, an occurrence of a condition that triggers a reselection of a satellite beam used for providing communication connectivity to passengers in the commercial passenger vehicle; obtaining, the computing platform, one or more alternate beam candidates for the reselection; selecting, according to a rule, a next satellite beam for providing the communication connectivity; and switching, upon selecting the next satellite beam, to the next satellite beam at a switching time.

## Description

### TECHNICAL FIELD

This document is generally related to systems, methods, and apparatus for providing in-flight connectivity.

### BACKGROUND

Commercial travel has evolved with the increasing popularity of personal electronic devices (PEDs) that passengers carry on board, as well as media player devices provided in commercial passenger vehicles. Furthermore, most modern commercial passenger vehicles include communication and display electronics, commonly referred to as in-flight entertainment and communication (IFEC) equipment. Due to proliferation of PEDs, there is an ever growing demand on bandwidth for data connectivity for the commercial passenger vehicle based PEDs.

### SUMMARY

This patent document describes, among other things, various implementations for providing reliable internet connectivity to commercial passenger vehicles in travel.

In one aspect, a method includes determining, by a computing platform, an occurrence of a condition that triggers a reselection of a satellite beam used for providing communication connectivity to passengers in the commercial passenger vehicle; obtaining, the computing platform, one or more alternate beam candidates for the reselection; selecting, according to a rule, a next satellite beam for providing the communication connectivity; and switching, upon selecting the next satellite beam, to the next satellite beam at a switching time

In another aspect, computing platform comprising at least one processor for providing data connectivity for passengers in a commercial passenger vehicle, wherein the at least one processor is configured to implement a method recited herein is disclosed.

In another aspect, a computer-readable storage medium is provided. The computer-readable storage medium has code stored thereon, the code, upon execution by one or more processors, causing the one or more processors to implement the above method.

In another example aspect, a data connectivity system comprising an airplane mounted computing platform and an airplane mounted satellite modem wherein the satellite modem is configured to operate under control of the computing platform causing the data connectivity system to implement a method is disclosed.

In yet another exemplary aspect, the above-described method is embodied in the form of processor-executable code and stored in a computer-readable program medium. The code, upon execution by one or more processors, causes the one or more processors to implement a method described herein.

The above and other aspects and their implementations are described in greater detail in the drawings, the description, and the claims.

### BRIEF DESCRIPTION OF THE DRAWINGS

FIG. 1 shows an example of an in-flight entertainment (IFE) system installed in an airplane based on some implementations of the disclosed technology.
FIG. 2 shows an example block diagram of a computing device based on some implementations of the disclosed technology.
FIG. 3 shows an example flowchart of operations for data connectivity.
FIG. 4 shows an example of a configuration of data and information exchange for assisting a DTAS based on some implementations of the disclosed technology.
FIG. 5 shows an example of a configuration of a DTAS for allocating transaction based on some implementations of the disclosed technology.
FIG. 6 shows different connectivity examples.
FIG. 7 is a block diagram of an example implementation of a satellite system in an aircraft.
FIG. 8 shows an example flowchart of a method of providing data connectivity for passengers in commercial passenger vehicle based on some implementations of the disclosed technology.
FIG. 9A and 9B depict examples of satellite coverage over a geographic region.

### DETAILED DESCRIPTION

Various implementations of the disclosed technology provide reliable, high bandwidth data connectivity in a commercial passenger vehicle.

### Introduction

Recent advances in wireless technologies have made wireless connection services such as on-board Wi-Fi or Bluetooth connections available during travel in a commercial passenger vehicle such as an airplane or train. Unlike the past when a passenger was not provided with wireless connection services onboard during travel, onboard wireless connection services are available in many commercial vehicles so that passengers can share their trips on social media and business travelers can use their flight time more productively. Therefore, passengers expect data connectivity throughout travel. One method by which airlines are able to offer internet connectivity to passengers is by installing satellite modems on aircrafts and providing a reliable data connection between aircrafts and satellites throughout the travel.

### Multi-orbit systems

In recent years, number of satellites available for data connectivity has steadily gone up. It will be beneficial for airplanes to maximize their connectivity by using every available satellite in space. This concept sometimes is called multi-orbit connectivity or a multi-orbit system because it may use satellites with different orbital patterns for achieving connectivity. Some benefits are as follows:

### Enhanced Coverage and Reliability

Multi-orbit systems, integrating GEO (geostationary earth orbit), LEO (low earth orbit), and potentially MEO (medium earth orbit) satellites, offer comprehensive global coverage. This ensures consistent and reliable connectivity across diverse flight routes, including over oceans and remote areas, where traditional single-orbit systems may have limitations.

### Improved Performance and Speed

LEO satellites, operating closer to Earth, can provide lower latency, leading to faster internet speeds and a more responsive experience for passengers. This is crucial for activities like streaming, online gaming, and cloud-based applications, enhancing the overall in-flight experience.

### Flexible and Scalable Network Utilization

By utilizing a mix of different orbits, airlines can dynamically switch between networks based on performance, cost, and bandwidth requirements. This flexibility allows for optimal use of available resources, ensuring efficient management of network traffic and capacity.

### Future-Proofing and Adaptability

As satellite technology evolves, a multi-orbit system allows for easier integration of new advancements and satellite constellations. This approach safeguards airlines' investments in connectivity infrastructure, ensuring long-term viability and adaptability to future technological developments.

### Diverse Service Offerings to Meet Passenger Demands

A multi-orbit framework enables the provision of varied and tailored connectivity packages. This diversity meets the increasing expectations of passengers for high-quality internet access, catering to different needs ranging from basic browsing to high-definition content streaming.

### Satellites - LEO, GEO, MEO

In the recent years, LEO (low earth orbit) satellites have become more readily available. LEO satellite connectivity provides reduced latency with faster response time (e.g., around 100 ms), compared to GEO (geostationary earth orbit) satellite connectivity (e.g., around 700 ms). The LEO latency falls below the tolerance threshold of most productivity computer apps such as video conferencing and document editing.

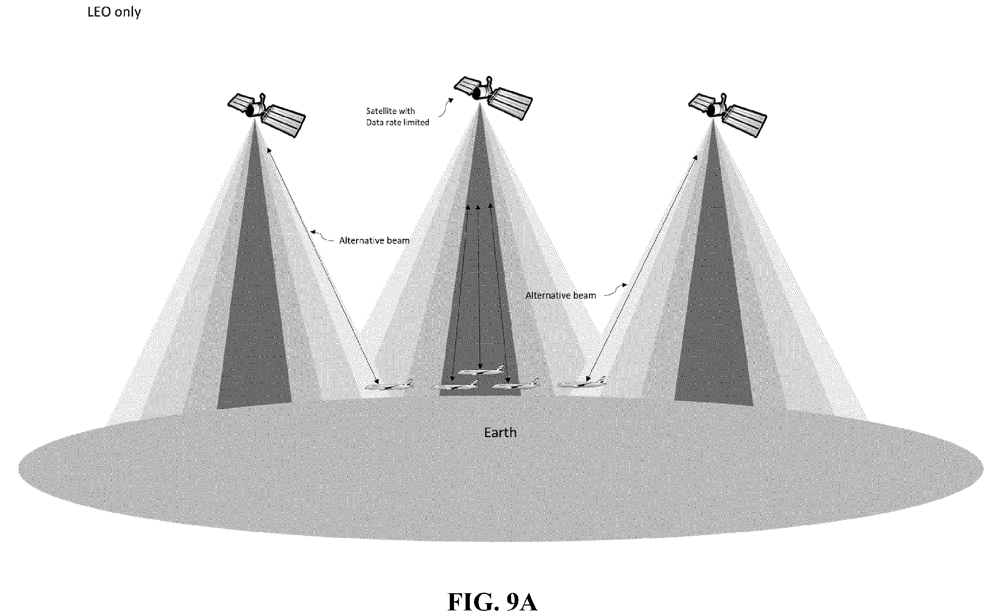

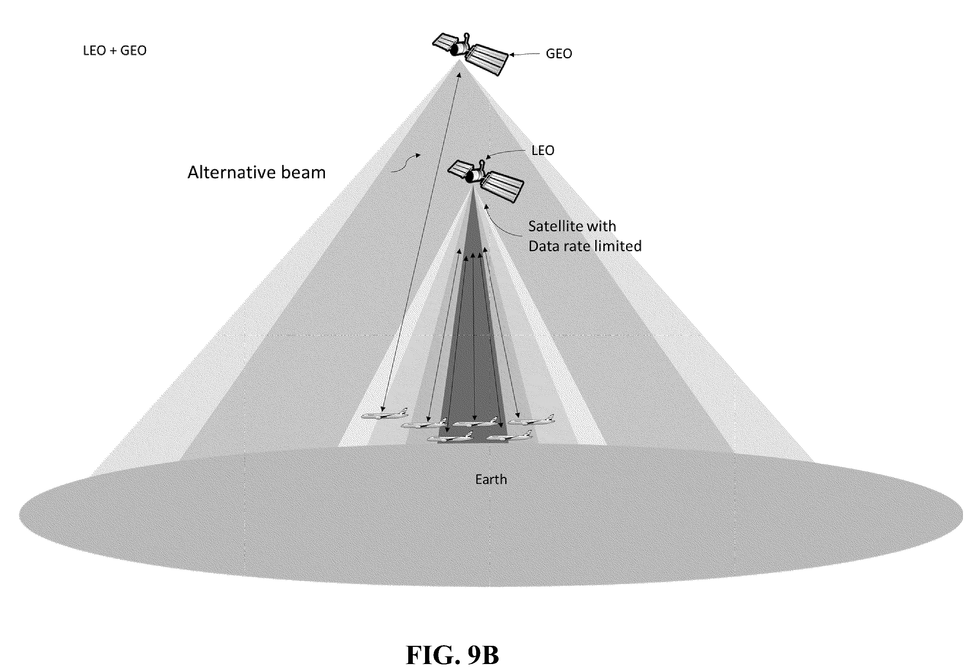

Currently, over 630 LEO satellites are available with approximately 16 beams per satellite. Currently, around 27 GEO satellites are available with 300+ beams per satellite. FIGS. 9A and 9B show examples of coverage offered by LEO satellites (FIG. 9A) and a combination of LEO and GEO satellites (FIG. 9B). As shown in the example of FIG. 9A, a geographic region of earth may be covered by one or more LEO satellites. For example, towards the center of the figure, only the middle LEO satellite is providing coverage based on beams, seen as differently shaded triangular emanations to/from satellite, generally forming elliptical footprint on ground. The footprint itself moves with movement of the satellite. For the leftmost airplane, two potential LEO satellites may be available to provide connectivity; the left satellite that may represent an alternative beam while the middle satellite that may offer current coverage. A similar situation. In some cases, e.g., when an airplane is within coverage of a single LEO satellite as seen in the middle of the drawing, different beams of the same satellite may provide different connectivity possibilities. As noted, due to orbiting, positions of LEO satellites themselves move with respect to a specifi location on ground. Therefore, on one hand, LEO satellites have become more readily available, but, on the other hand, due to relative movement between aircrafts and LEO satellites, an aircraft may need to make or break connections with multiple LEO satellites during its travel path.

FIG. 9B shows an example where, at certain locations during travel, aircrafts may have potential to establish connectivity with either a LEO satellite or a GEO satellite. Due to higher altitude orbiting position, a GEO satellite may offer a larger coverage footprint. Therefore, from time to time, e.g., with respect to the leftmost airplane, it may be desirable for the airplane to switch from LEO coverage to GEO coverage by using the alternative beam with a GEO satellite.

The present document discloses techniques that enable an aircraft to monitor for different satellite beam candidates and perform a switch, when possible. In one advantageous aspect, the switching is performed in a stable and seamless manner so that no ping-ponging will occur. These, and other, aspects are described throughout the document.

Various implementations will be discussed in detail with reference to the figures below. In the description, an airplane is described as an example of the passenger vehicle, but the implementations of the disclosed technology can be applicable to other passenger vehicles such as buses, trains, ships, and other types of commercial passenger vehicles.

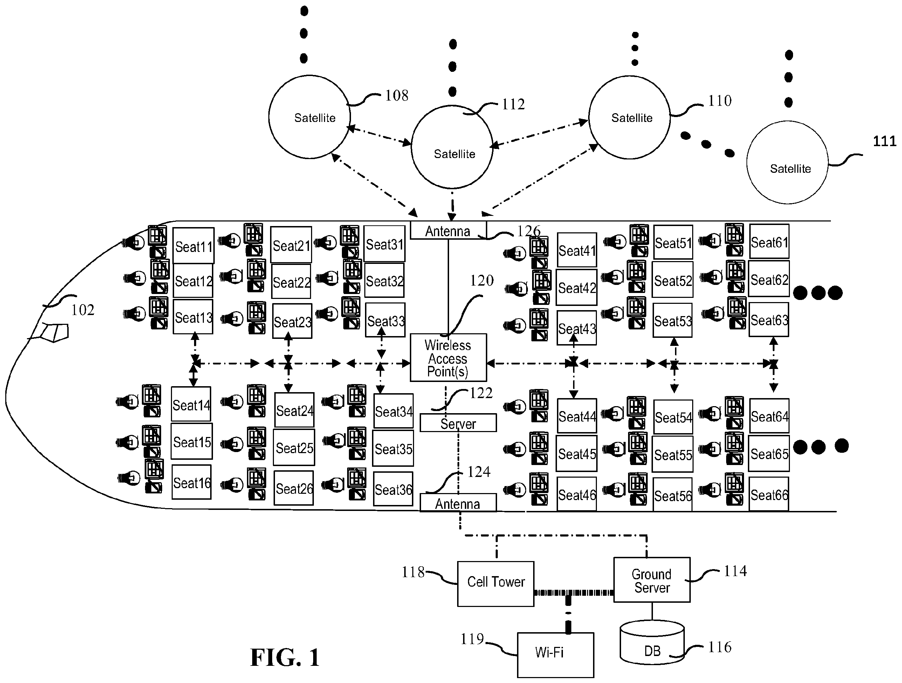

FIG. 1 shows an example of an in-flight entertainment (IFE) system installed in an airplane 102. The IFE system provides various entertainment and connectivity services to passengers on board. Referring to FIG. 1, the IFE system includes a server 122, antenna 126, and antenna 124. The components shown as a single element in FIG. 1 (e.g., the server 122, the wireless access point 120, etc.) can be configured in multiple elements. For example, the in-flight service system can include multiple wireless access points to facilitate or support providing wireless coverages for the passengers. The passengers carry their own devices, which include the PEDs (illustrated by the light bulb icon in FIG. 1) and other wireless electronic devices. The PEDs may refer to any electronic computing device that includes one or more processors or circuitries for implementing the functions related to data storage, video and audio streaming, wired communications, wireless communications, etc. The examples of the PEDs include cellular phones, smart phones, tablet computers, laptop computers, and other portable computing devices. In the implementations of the disclosed technology, the PEDs may have the capability to execute application software programs ("apps") to perform various functions.

In FIG. 1, the airplane 102 is depicted to include multiple passenger seats, Seat11 to Seat 66. The media playback devices (illustrated by screen icon) are provided at each passenger seat and configured with capabilities for video and audio streaming, Internet communications, and other capabilities. In some implementations, the media playback devices are provided at each passenger seat, such as located at each of the seatbacks of the passenger seats, and/or on cabin walls and/or deployable from an armrest for seats located at a bulkhead (i.e., in the first row of a section). The media playback devices have displays providing interfaces to each passenger through which each passenger enters his or her selections on the entertainment option, e.g., the particular selections, emergency requests, etc. Upon receiving the selection from the passengers, based on the selections from the passengers, the media playback device displays entertainment content and travel information. In the implementations, to assist the dynamic transaction allocation for the wireless connection services for the passengers, various graphic user interface (GUI) functions can be suggested and displayed on the media playback devices.

The server 122 is communicably coupled with media playback devices and the PEDs and perform various operations including processing requests/inputs from passengers and providing data to passengers. The communications between the server 122 and the passengers' onboard devices including the media playback devices and the PEDs are either realized by wired connections or wireless connections. In some implementations, the communication among the server 122, the media playback devices, and the PEDs are achieved through the antenna 124 to and from the ground-based cell towers 118 by, for example, a provision of network plugs at the seat for plugging PEDs to a wired onboard local area network. In some other implementations, the communications among the server 122, the media playback devices, and the PEDs are achieved through the antenna 126 to and from satellites 108, 110, 111, 112 in an orbit (e.g., via a cellular network utilizing one or more onboard base station(s), Wi-Fi utilizing the wireless access point 120, and/or Bluetooth).

In some implementations, a crew terminal is provided in the airplane 102 utilized by a ground crew, a cabin crew, or a flight crew to access the IFE maintenance functions such as loading new content, replenishing multimedia content digital rights management (DRM) keys, and so on. The crew terminal is in communication with other devices of the IFE system such as the server 122, media playback devices, the PEDs, and the ground server. In some implementations, the crew terminal can be implemented as a part of the server 122. In some implementations, the crew terminal is in communication with the gate terminal to facilitate the dynamic transaction allocation. In some implementations, the gate terminal and the onboard crew terminal store apps to support the dynamic transaction allocation. The gate terminal and the crew terminal are typically accessed by a gate agent or a crew member responsible for overseeing boarding operation. User ID and passwords may be required to authorize the access to the gate terminal and the onboard crew terminal to facilitate identifying of the agent or crew member conducting the boarding operation and to prevent unauthorized access to the system.

The server 122, the media playback devices, and the PEDs form a local network on board the airplane 102 through an onboard router (not shown). The server 122 is also communicably coupled with the ground server 114 through the antenna 126 for receiving and transmitting information from/to the ground server 114. In some examples, cell towers 118 communicate or interface with the antenna 124 of the airplane 102, such that ground systems such as the ground server 114, the database 116, and the gate terminal can transmit and receive data with the server 122 and other in-vehicle systems. In some implementations, Wi-Fi element 119 provides a wireless local area network (WLAN) to allow the server 122 to communicate with the ground systems. Thus, the cell tower 118 and the Wi-Fi element 119 may act as communication nodes between the antenna 124 of the airplane 102 and the ground systems such as the ground server 114, the databases 116, and the ground terminal. The ground server 114 can be located at various locations, including a gate where passengers check-in the boarding pass right before passengers are on board, a computer center at an arbitrary location on the ground, etc. In some examples, the gate terminal may correspond to the ground server 114 located at the gate and thus can be one example of the ground server 114. The ground server 114 may be in communication with the database 116 and provide information from the database 116 to the server 122 and store information received from the server 122 in the database 116. Although FIG. 1 shows that the database 116 is provided separately from the ground server 114, the database 116 can be provided as a part of the ground server 114.

Although not shown in FIG. 1, the IFE system may further include a database which stores passenger information, for example, profiles of the passengers (name, age, etc.), preferred entertainment options (movies, music, shows, etc.), preferred entertainment content (e.g., genres of movies), etc. The passenger information can be obtained in multiple manners and is stored in the database of the IFE system. In some implementations, the passenger information is obtained prior to the passengers coming on board (e.g., at the time of purchasing the tickets or checking in for the flights), or at other times. In some implementations, the passenger information can be obtained and shared by an association of several airplane companies and retrieved from the database 116. In some implementations, the passenger information can be updated during the travel of the airplane 102.

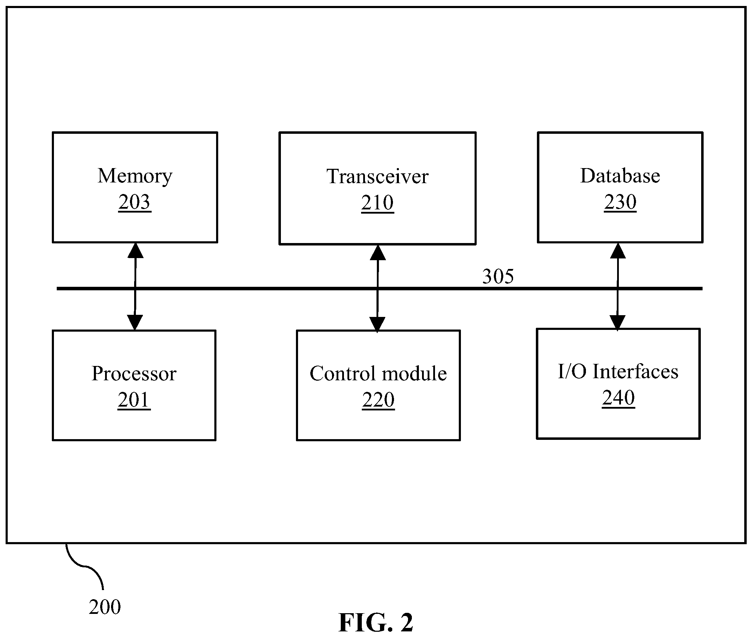

FIG. 2 shows an example block diagram of a computing device (e.g., an onboard server, a PED, a ground server, or a crew terminal) based on some implementations of the disclosed technology. The computing device 200 includes at least one processor 201, a memory 203, a transceiver 210, a control module 220, a database 230, and an input/output (I/O) interface 240. In other embodiments, additional, fewer, and/or different elements may be used to configure the computing device 200. The memory 203 may store instructions and applications to be executed by the processor 201. The memory 203 is an electronic holding place or storage for information or instructions so that the information or instructions can be accessed by the processor 201. The memory 203 can include, but is not limited to, any type of random access memory (RAM), any type of read-only memory (ROM), any type of flash memory, such as magnetic storage devices (e.g., hard disk, floppy disk, magnetic strips, etc.), optical disks (e.g., compact disc (CD), digital versatile discs (DVD), etc.), smart cards, flash memory devices, etc. The instructions upon execution by the processor 201 configure the computing device 200 to perform the operations, which will be described in this patent document. The instructions executed by the processor 201 may be carried out by a special purpose computer, logic circuits, or hardware circuits. The processor 201 may be implemented in hardware, firmware, software, or any combination thereof. The term "execution" is, for example, the process of running an application or the carrying out of the operation called for by an instruction. The instructions may be written using one or more programming language, scripting language, assembly language, etc. By executing the instruction, the processor 201 can perform the operations called for by that instruction.

The processor 201 operably couples with the memory 203, the transceiver 210, the control module 220, the database 230, and the I/O interface 240, to receive, send, and process information and to control the operations of the computing device 200. The processor 201 may retrieve a set of instructions from a permanent memory device, such as a ROM device, and copy the instructions in an executable form to a temporary memory device that is generally some form of RAM. In some implementations, the computing device 200 can include a plurality of processors that use the same or a different processing technology. The transceiver 210 may include a transmitter and a receiver. In some embodiments, the computing device 200 comprises a transmitter and a receiver that are separate from one another but functionally form a transceiver. The transceiver 210 transmits or sends information or data to another device (e.g., another server, a PED, etc.) and receives information or data transmitted or sent by another device (e.g., another server, a PED, etc.). As will be discussed later, the implementations of the disclosed technology provide data connection services across multiple heterogenous networks including LEO, GEO, and/or MEO, each having a respective authentication, authorization and accounting (AAA) function, by determining a sponsorship for the payment of the data connection services for the pass. The determining of the sponsorship may be based on the type of the transceiver, e.g., whether the airplane has a single channel transceiver or a dual channel transceiver.

The control module 220 of the computing device 200 is configured to perform operations to assist the computing device 200. In some implementations, the control module 220 can be configured as a part of the processor 201. When the computing device 200 corresponds to the IFE system as shown in FIG. 1, the control module 220 can be included in the airplane 102. In some implementations, the control module 220 can operate machine learning/artificial intelligence (AI) applications that perform various types of data analysis to automate analytical model building. Using algorithms that iteratively learn from data, machine learning applications can enable computers to learn without being explicitly programmed. The machine learning/AI module may be configured to use data learning algorithms to build models to interpret various data received from the various devices or components to detect, classify, and/or predict future outcomes. Such data learning algorithms may be associated with rule learning, artificial neural networks, inductive logic programming, and/or clustering. In some implementations, the control module 220 may assist the computing device 200 to perceive their environment and take actions that maximize the effectiveness of the operations performed by the computing device 200.

The I/O interfaces 240 enable data to be provided to the computing device 200 as input and enable the device computing device 200 to provide data as output. In some embodiments, the I/O interfaces 240 may enable user input to be obtained and received by the computing device 200 (e.g., via a touch-screen display, buttons, or switches) and may enable the computing device 200 to display information. In some embodiments, devices, including touch screen displays, buttons, controllers, audio speakers, or others, are connected to the computing device 200 via I/O interfaces 240.

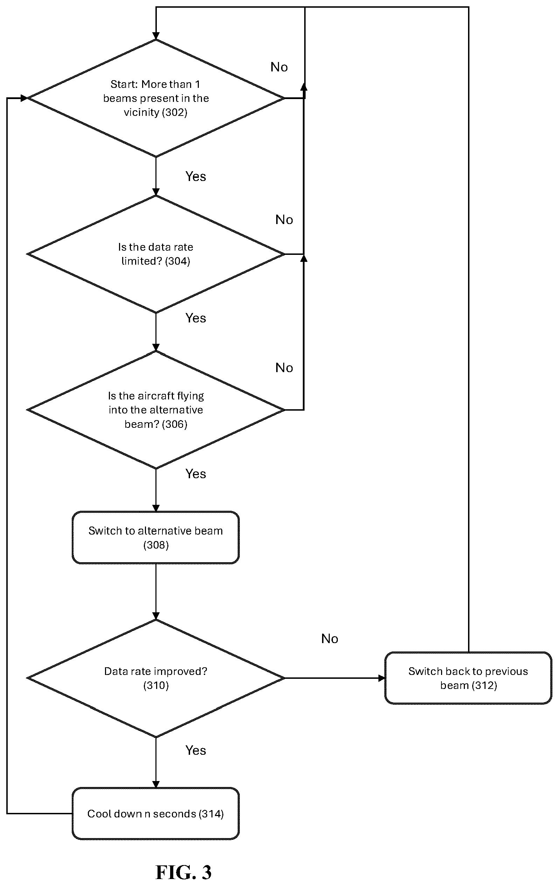

FIG. 3 shows an example flowchart of operations for data connectivity that may be performed on a computing platform such as the server 122 or another suitable platform in the airplane 102 to manage data connectivity with satellites 108, 110, 111, 112. One implementation example of the computing platform is described in FIG. 2.

At 302, a determination (which may be continually performed during travel) is made about whether more than one satellite beams are present near position of the airplane. This determination may be made either based on actual operation of a satellite modem to scan different frequencies and directions or may be based on a database that lists satellites that should be available to the airplane, based on its current location and heading. The database may be provided to the computing platform from the ground server.

At 304, a determination is made about whether data rate of satellite beam that is currently being used for data connectivity is sufficient. For example, ongoing traffic or physical layer parameters may be monitored to check if the data rate over a period of time is above or below a threshold. In some embodiments, a quality of service feedback may be solicited or received from PEDs to determine whether current data link rate is satisfactory.

At 306, when it is determined that the data rate is limited, a directionality of the aircraft travel path may be used to figure out if there are any alternate beam candidates available. Here, the computing platform may use aircraft vector from air data inertial reference unit (ADIRU) and satellite vector of directionality of satellite beam coverage from a database. An aircraft may be fitted with multiple satellite tuners allowing the aircraft to sweep through its view of the sky to check available satellites and quality/ data rate of the beams.

At 308, based on a rule, a switch may be performed to an alternate beam.

At 310, a determination (e.g., similar to 304) may be made about whether the new data rate is acceptable and has resulted in an improvement. At the same time, a hysteresis timer may be set to avoid unnecessary beam switching. After countdown of n seconds (314) beam switching may further be allowed. If data rate has not improved, at 312, the data connectivity may be switched back to the original satellite beam.

It is noted that the decision flow of FIG. 3 may use uplink data only rate, downlink data only rate or a combination of uplink and downlink data rates in order to determining whether a satellite beam is providing an acceptable level of connectivity.

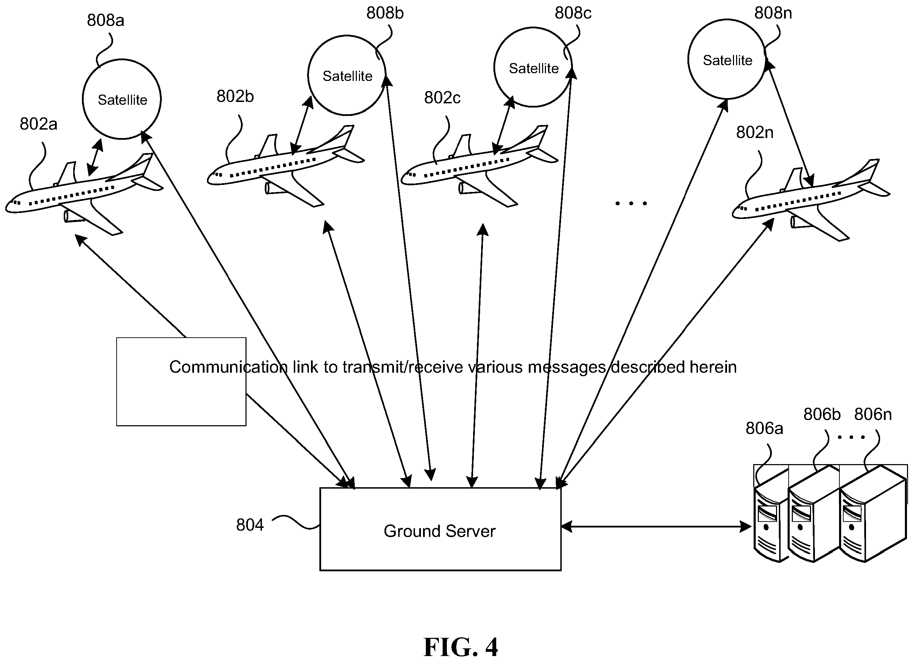

FIG. 4 shows an example of a configuration of data and information exchange for assisting the beam switching according some implementations of the disclosed technology. In the example of FIG. 4, the ground server 804 is located on the ground and communicates with airplanes 802a to 802n, satellites 808a to 808n, and external servers 806a to 806n. Each of the plurality of airplanes 802a to 802n includes an IFE system. The IFE systems of the airplanes 802a to 802n, the ground server, and the external server 806a to 806n can communicate to exchange data and information to assist the operations/functions of the DTAS. For example, the DTAS can obtain from the ground server 114 information about passengers and utilize the passenger information to determine demands for wireless connection services for passengers. In some implementations, the ground server 804 works to proactively identify data rate reduction below a threshold level to indicate to the airplane based computing platform to initiate a beam switching.

The external server 806a to 806n may correspond to servers corresponding to different funding sources entities, e.g., airlines, credit card companies, hotels, rental car companies, retails, partner corporates, advertisers, social medias, affiliations, etc. The IFE systems of the airplanes 802a to 802n can communicate directly with the external servers 806a to 806n or indirectly with the external servers 806a to 806n via the ground server 804. In each airplane, an onboard server can communicate with the ground server 804 and the external server 806a to 806n via an antenna directly or through satellites 808a to 808n. Although the ground server 804 is shown in FIG. 4 as being located on the ground, the ground server 804 can be located in the cloud or at a remote location. The external servers 806a to 806n may be located outside of the airplanes and communicate with the ground terminal over the Internet or wired or wireless networks using a variety of communication protocols.

Although now shown in the drawing, the implementations of the disclosed technology implement the following functions:

Multi-Orbit setup (Wi-Fi Service Layer): LEO (low earth orbit) or GEO (geostationary earth orbit) or MEO (medium earth orbit) coverage based on type of passenger requested service (live TV, live sport, movie download location) from an airline app during a particular leg of a flight and the location/timing of requested service is provided from, and passenger/service provider/mobile operator preferences. In some implementations, the DTAS establishes wireless connection services across multiple heterogenous networks including LEO, GEO, and/or MEO, each having a respective authentication, authorization and accounting (AAA) function.

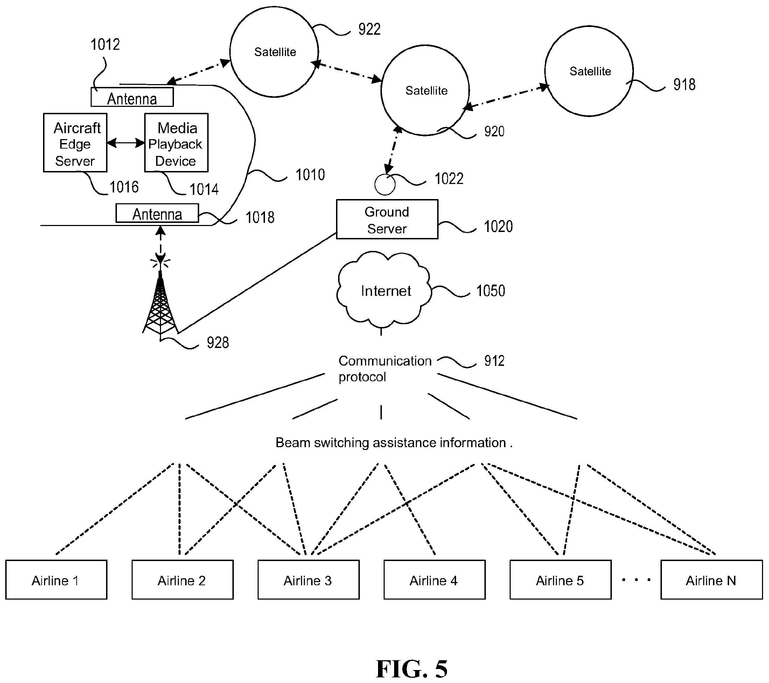

FIG. 5 shows an example of a configuration for providing beam switching assistance information to airlines based on some implementations of the disclosed technology. In the example of FIG. 5, some elements of the airplane 1010 are shown, which include antennas 1012 and 1018, a media playback device 1014, and a server 1016. The media playback device 1014 is in communication with a server 1016 and the airplane 1010 is in communication with a ground server 1020 through an antenna 1012 (on airplane 1010) via one or more satellites 918, 920, 922 and/or a terrestrial communication station 928.

The antenna 1012 maybe sized and shaped to fit within the space specified by the relevant standard. For communication with geostationary satellites and providing a satisfactory communication experience for passengers on the airplane, the antenna needs to satisfy certain characters related to antenna performance. For example, G/T is a factor typically used for characterizing antenna performance, where G is the antenna gain in decibels in a receive frequency band, and T is the equivalent noise temperature in Kelvins. For example, the antenna 1012 may be configured to provide a certain range of G/T depending on area features during a travel of the airplane 1010. The G/T values are simply provided as examples and are not to be construed as limiting the various adaptive aspects described herein.

For the communications between the ground server 1020 and the airplane 1010, a ground server antenna 1022 is further provided. The ground server 1020 can retrieve data from the airplane 1010 using communication links through the antenna 1012, one or more satellites 918, 920, 922, the ground server antenna 1022, and/or the terrestrial communication station 928. In some implementations, the ground server 1020 can be communicably coupled to the Internet 1050 to retrieve processed data. The Internet 1050 is an example only and other communication protocols can be used to enable the communications between the ground server 1020 and additional servers/platforms.

As shown in FIG. 5, ground server 1020 can be further in communication with various servers/platforms to obtain various network/operational data, for example, quality of service (QoS) related message including accounting information, auction information, QoS related information, or others. Although the QoS related information is shown in FIG. 5, the QoS is the example of service quality related information. In the implementations, various service quality related information may be utilized without being limited to the QoS related information. The various data can be obtained from various platforms/sources, including multiple airlines, Airlines 1 to N. Although not shown, the machine learning/artificial intelligence module can be employed to cooperate with the ground server 1020 to provide the network/operational data obtained from various servers/platforms. The various servers/platforms can operate as sources of various data that is related to a travel by a commercial passenger vehicle and provide any related information to the ground server 1020 (and/or the machine learning/artificial intelligence module). Such data can be utilized by the ground server 1020 (and/or the machine learning/artificial intelligence module) and communicated with the aircraft edge server 1016 to perform a determination about current beam data rate and whether switching is to be initiated according to an airlines policy.

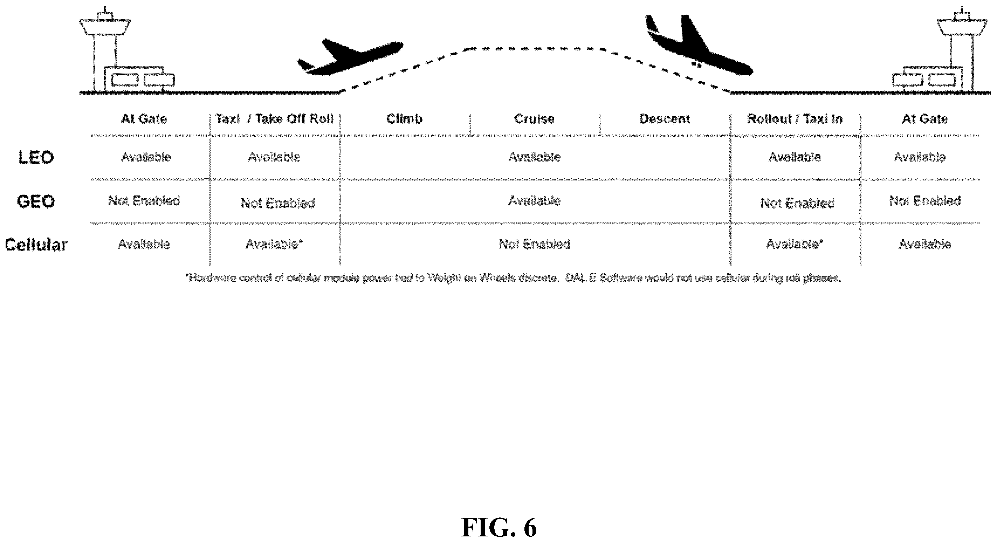

FIG. 6 is a depiction of various data connectivity options available to an aircraft during travel. As can be seen from FIG. 6, being able to switch between different connectivity beams allows an aircraft to provide data connectivity throughout travel, from wheels up to wheels down.

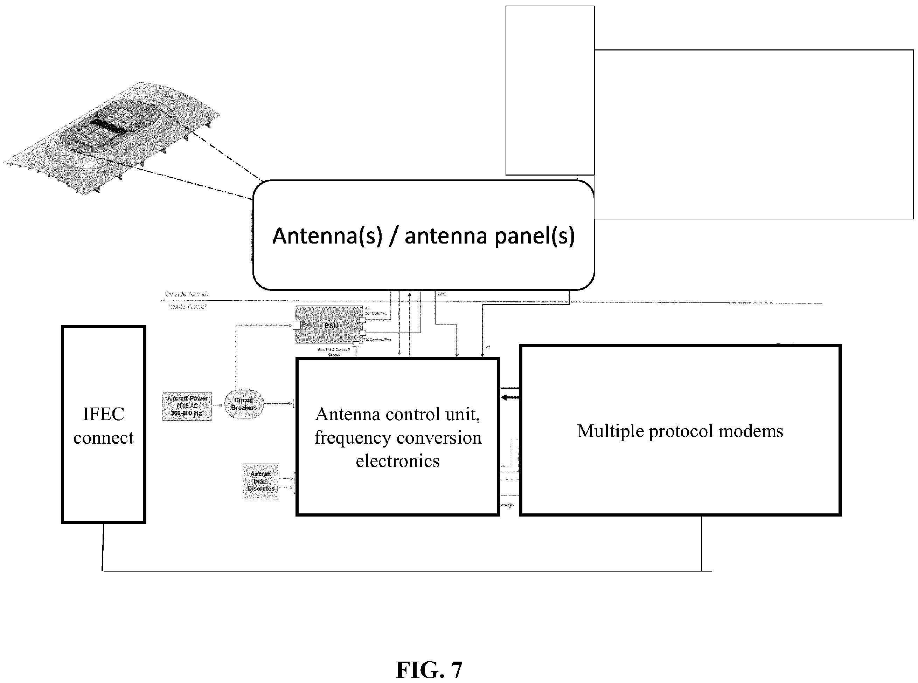

FIG. 7 is a block diagram of an example satellite transceiver installation in an aircraft. Top left shows an example of a satellite antenna panel on the outside of an aircraft. In general, the outer body of an aircraft may be fitted with multiple antennas/ antenna tiles/ antenna panels allowing simultaneous connectivity to multiple satellites. Inside the aircraft, the IFEC system (left) may be communicatively connected to an antenna signal conversion unit that performs tasks such as frequency conversion and receiving/transmitting to and from the antennas on the outside and the IFEC system. The aircraft may provide power to the antenna control unit through a power grid laid inside the aircraft. On the top side, the antenna control unit may exchange analog signals with antenna panels, while on the right side, digital signals may be exchange with multiple protocol modems (e.g., Wi-Fi or other local area wireless network) and/or IFCE system (e.g., servers in the aircraft).

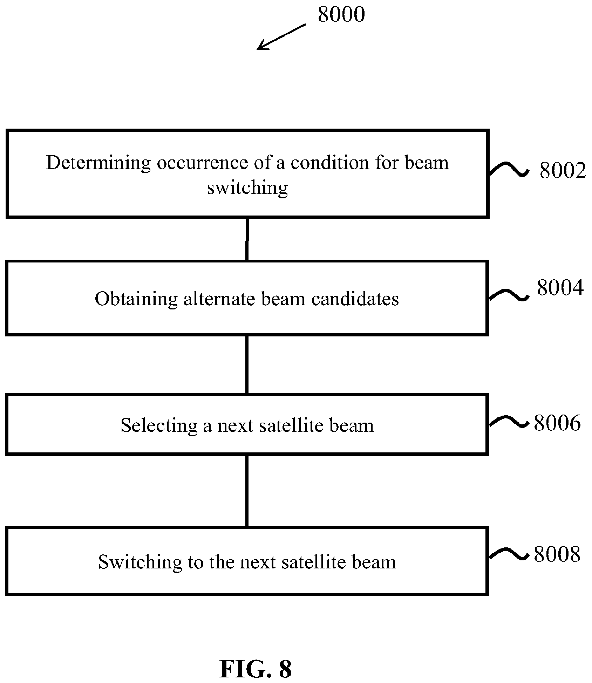

The following listing of solutions may preferably be adopted by some embodiments.
1. A method (e.g., method 8000 in FIG. 8) for providing data connectivity for passengers in a commercial passenger vehicle, comprising: determining (8002), by a computing platform, an occurrence of a condition that triggers a reselection of a satellite beam used for providing communication connectivity to passengers in the commercial passenger vehicle; obtaining (8004), the computing platform, one or more alternate beam candidates for the reselection; selecting, (8006) according to a rule, a next satellite beam for providing the communication connectivity; and switching,(8008) upon selecting the next satellite beam, to the next satellite beam at a switching time.
   The method 8000 may be implemented by a computing platform (e. g., FIG. 2) at, for example, locations where the beam coverages in FIG. 9A or 9B overlap with each other, meaning that there are multiple possible LEO satellite beams available for data connectivity. In other locations, the computing platform may suppress execution of this method in order to minimize or eliminate switching transients in beam connectivity that may end up affecting user experience.
2. The method of solution 1, wherein the condition that triggers the reselection comprises a condition that a beam data rate of the satellite beam has fallen below a threshold, or a signal strength of the satellite beam has fallen below another threshold. The thresholds may be a priori determined, or determined according to amount of data traffic, QoS feedback from PEDs, current number of passengers, geographic location or time of the aircraft (e.g., during day time, passengers may be more inclined to use data compared to night time) and so on.
3. The method of any of solutions 1-2, wherein the condition that triggers the reselection comprises a condition that multiple other satellite beams are available to the commercial passenger vehicle at a location thereof. For example, such a situation may arise where multiple zones of different LEO satellites are overlapping with each other, as can be seen in FIG. 9A or 9B.
4. The method of any of above solutions, wherein the obtaining the one or more alternate beam candidate comprises performing a frequency and/or spatial scan that detects presence of the one or more alternate beams.
5. The method of any of above solutions, wherein the obtaining the one or more alternate beam candidate comprises using a predetermined record of satellite beam availability. The predetermined record may be a database of available satellites, which may be loaded onto the aircraft based on its planned travel route and known positions of satellites along the travel route. In some cases, a combination of the predetermined record and an actual scan may be used. For example, in some embodiments, the predetermined record may be first looked up to check potentially available satellites/beams at a location where the computing platform is currently is. Next, based on a list of the potentially available satellites/beams, an abbreviated scan that is contained only to the entries of this list may be performed. Such an abbreviated scan may allow for power saving and a relatively quick determination of potential beam candidates. In some embodiments, a number of entries in the scan list may be determined based on operational factos including the severity of the condition. For example, when the condition indicates that the coverage reliability of the current beam has significantly degraded (e.g., below a threshold, averaged over a time interval). In some embodiments, the greater the severity, the shorter the list that is used for scanning such that the computing platform can quickly determine alternate beams. When the degradation in the existing connectivity is relatively minor, the computing platform may scan through a longer list of candidates to determine the best choice.
6. The method of any of above solutions, wherein the rule specifies to switch to a beam having a greater data rate or a stronger signal or a better signal to noise ratio. Here, as mentioned previously, uplink (from aircraft to satellite) or downlink (from satellite to the aircraft) data rate may be taken into account, or a weighted average of the two data rates may be used. In some cases, two different thresholds ma be used based on data direction.
7. The method of solution 1, including: setting, after the switching, a timer; and wherein the rule prohibits stream switching until the timer expires. In various embodiments, the timer may be set between 1 minute to 10 minutes, and may depend on the speed of the aircraft and how far inside a specific beam coverage (see FIG. 9A or 9B) of coverage the aircraft currently is. For example, when the aircraft is closer to the center of the ellipse, the switching timer may be longer than when the aircraft is towards periphery of a coverage region. In some embodiments, the rule may additionally, or alternatively, require the airplane to have traveled a certain distance (e.g., a distance threshold) before a next switch can be performed. This may be beneficial because, in some cases, at edges of beam coverages, the airplane may be taking a path that goes in and out of the beam foot print and therefore the switching may only be activated after the airplane has moved a sufficient distance away from the original location for a reliable reading of the beam and the alternate beams. Accordingly, the method may including, setting, after the switching, a counter to measure distance traveled by the airplane. Specifically, this distance may be measured as a linear distance, a radial distance with respect to a central axis of a current coverage beam or a combination thereof.
8. The method of any of above solutions, wherein the satellite beam provides a connectivity with a low earth orbit (LEO) satellite.
9. The method of any of above solutions, wherein the rule specifies that, in case that multiple alternate beam candidates are available, the next satellite beam is selected as a function of multiple properties of each of the alternate beam candidates.
10. The method of solution 9, wherein the multiple properties include a directionality of travel of the commercial passenger vehicle compared to geographic footprints of the alternate beam candidates, such that a first beam candidate in a direction of path of the commercial passenger vehicle is preferred over a second beam candidates not in the direction of the path of the commercial passenger vehicle.
11. A computing platform comprising at least one processor for providing data connectivity for passengers in a commercial passenger vehicle, wherein the at least one processor is configured to implement a method recited in any of solutions 1-10.
12. A data connectivity system comprising an airplane mounted computing platform and an airplane mounted satellite modem wherein the satellite modem is configured to operate under control of the computing platform causing the data connectivity system to implement a method recited in any of solutions 1-10.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this patent document.

## Claims

1. A method for providing data connectivity for passengers in a commercial passenger vehicle, comprising:
determining, by a computing platform, an occurrence of a condition that triggers a reselection of a satellite beam used for providing communication connectivity to passengers in the commercial passenger vehicle;
obtaining, the computing platform, one or more alternate beam candidates for the reselection;
selecting, according to a rule, a next satellite beam for providing the communication connectivity; and
switching, upon selecting the next satellite beam, to the next satellite beam at a switching time.

2. The method of claim 1, wherein the condition that triggers the reselection comprises a condition that a beam data rate of the satellite beam has fallen below a threshold, or a signal strength of the satellite beam has fallen below another threshold.

3. The method of any of claims 1-2, wherein the condition that triggers the reselection comprises a condition that multiple other satellite beams are available to the commercial passenger vehicle at a location thereof.

4. The method of claim 1, wherein the obtaining the one or more alternate beam candidate comprises performing a frequency and/or spatial scan that detects presence of the one or more alternate beams.

5. The method of claim 1, wherein the obtaining the one or more alternate beam candidate comprises using a predetermined record of satellite beam availability.

6. The method of claim 1, wherein the rule specifies to switch to a beam having a greater data rate or a stronger signal or a better signal to noise ratio.

7. The method of claim 1, including:
setting, after the switching, a timer; and
wherein the rule prohibits stream switching until the timer expires.

8. The method of claim 1, wherein the satellite beam provides a connectivity with a low earth orbit (LEO) satellite.

9. The method of claim 1, wherein the rule specifies that, in case that multiple alternate beam candidates are available, the next satellite beam is selected as a function of multiple properties of each of the alternate beam candidates.

10. The method of claim 9, wherein the multiple properties include a directionality of travel of the commercial passenger vehicle compared to geographic footprints of the alternate beam candidates, such that a first beam candidate in a direction of path of the commercial passenger vehicle is preferred over a second beam candidates not in the direction of the path of the commercial passenger vehicle.

11. The method of claim 1, including:
setting, after the switching, a counter of distance traveled, and
wherein the rule prohibits stream switching until the counter exceeds a distance threshold.

12. The method of claim 11, wherein the distance traveled is measured as a combination of linear distance traveled and radial distance traveled with respect to a central axis of the satellite beam.

13. A computing platform comprising at least one processor for providing data connectivity for passengers in a commercial passenger vehicle, wherein the at least one processor is configured to implement a method recited in any of claims 1-12.

14. A data connectivity system comprising an airplane mounted computing platform and an airplane mounted satellite modem wherein the satellite modem is configured to operate under control of the computing platform causing the data connectivity system to implement a method recited in any of claims 1-12.
